# FASCICULE DE BREVET EUROPEEN

(11) **EP 2 854 415 B1**
(45) Date de publication et mention de la délivrance du brevet: **22.07.2020**
(21) Numéro de dépôt: 14187006.3
(22) Date de dépôt: 30.09.2014
(51) Int. Cl.: H04N 21/4722, H04N 21/41

(54) **Procédé de transmission dynamique de données d'information relatives à un programme audio et/ou vidéo**
Dynamisches Übertragungsverfahren von Informationsdaten über ein Audio- und/oder Videoprogramm
Method for dynamic transmission of information data relating to an audio and/or video programme

(30) Priorité: 30.09.2013 FR 1359450
(43) Date de publication de la demande: 01.04.2015
(73) Titulaire: ORANGE, 75015 Paris (FR)
(72) Inventeur: Satheeskumar Varma, Vineeth, 91440 BURES-SUR-YVETTE (FR); El Ayoubi, Salah-Eddine, 94270 LE KREMLIN-BICÊTRE (FR)
(74) Mandataire: Cabinet Beau de Loménie

(56) Documents cités:
- WO-A1-2011/102886
- WO-A2-2012/120524
- US-A1- 2003 035 075
- US-A1- 2012 291 073

## Description

### Arrière-plan de l'invention

L'invention se rapporte au domaine général des télécommunications.

Elle concerne plus particulièrement l'enrichissement d'un programme audio et/ou vidéo diffusé par un canal de diffusion tel une chaîne de radio ou de télévision numérique au moyen d'informations complémentaires, telles que par exemple des références bibliographiques, des documents géographiques ou historiques, des quizz ou des propositions de vote, des vidéos, des photos, des musiques en lien avec ce programme ou encore des données relatives à un autre canal de diffusion en lien avec ce programme. Dans la suite de la description, on désigne ces informations complémentaires par « données d'information relatives à un programme », indépendamment de la nature de ces informations. Il peut s'agir aussi bien d'éléments à caractère informatif sur le programme, que des choix d'actions associées à ce programme (comme par exemple la possibilité pour un utilisateur de voter parmi un nombre d'éléments qui lui sont présentés). Ces données d'information sont présentées sous la forme de données numériques contenues dans un fichier pouvant être de différente nature (ex. texte, audio, vidéo, etc.).

Il existe dans l'état actuel de la technique, différentes solutions permettant d'enrichir un programme audiovisuel à l'aide d'informations complémentaires.

Une première solution consiste à diffuser sur le canal de diffusion le programme audio et/ou vidéo accompagné d'informations consultables directement sur le dispositif utilisé pour la restitution de ce programme (ex. téléviseur). Ces informations se présentent notamment sous la forme de télétexte, et sont transmises avec les signaux transportant le programme diffusé. Leur contenu est par conséquent relativement pauvre du fait de la bande passante limitée disponible pour les transmettre.

Pour pallier cet inconvénient, une deuxième solution consiste, pour la chaîne de radio ou de télévision, à posséder son propre site web sur lequel elle a la possibilité de mettre en ligne des informations complémentaires riches en contenu (ex. des informations audiovisuelles). Toutefois, cette solution impose à l'auditeur et/ou au spectateur du programme, pour pouvoir profiter de ces informations complémentaires, de se connecter de sa propre initiative sur le site web de la chaîne, après (ou éventuellement pendant) la restitution du programme audio et/ou vidéo.

Le document US 2002/0083464 présente une troisième solution dans laquelle un spectateur d'un programme audiovisuel proposé par un canal de diffusion et diffusé par l'intermédiaire d'un décodeur numérique envoie à ce décodeur numérique, via un bouton dédié d'une télécommande, une requête d'informations complémentaires sur le programme audiovisuel qu'il visualise. Cette requête est relayée par le décodeur numérique vers un serveur de contenu de la chaîne de télévision diffusant le programme. Celui-ci renvoie alors une liste d'éléments d'informations au décodeur numérique qui les affiche sur le téléviseur du spectateur, simultanément ou en remplacement du programme audiovisuel. Ces éléments peuvent prendre notamment la forme de courtes descriptions éventuellement accompagnées d'un lien vers un serveur web. La sélection par le spectateur d'un élément spécifique de la liste via sa télécommande se traduit par l'envoi sur sa télévision, par le serveur de contenus, des informations complémentaires correspondant à l'élément sélectionné et, le cas échéant, hébergées par le serveur web.

Cette troisième solution permet de personnaliser les informations complémentaires présentées au spectateur, en fonction de ses intérêts. Toutefois, le type d'informations complémentaires fournies au spectateur sur sa télévision reste limité, notamment du fait de la bande passante disponible pour fournir ces informations. Par ailleurs, les possibilités d'interactivité avec le spectateur sont réduites, en partie car elles nécessitent la prévision d'un bouton spécifique sur la télécommande du décodeur numérique.

Le document WO2012/120524 décrit un procédé et un système pour mettre en oeuvre une application de télévision interactive.

Le document WO2011/102886 décrit un système et un procédé qui identifie et fournit automatiquement un contenu à un utilisateur.

### Objet et résumé de l'invention

L'invention permet de pallier notamment les inconvénients précités en proposant un procédé de transmission dynamique de données d'information relatives à un programme audio et/ou vidéo, destiné à être mis en œuvre par une passerelle apte à relier un premier réseau de télécommunications à un second réseau de télécommunications et, optionnellement, par un décodeur numérique connecté à la passerelle, le procédé de transmission comprenant :
- une étape de détection d'un canal de diffusion (i.e. chaîne de diffusion) diffusant un programme audio et/ou vidéo restitué au même moment par un dispositif de restitution audio et/ou vidéo ;
- une étape d'envoi, via le second réseau, à destination d'un serveur ayant accès à des données d'informations relatives au moins à ce canal de diffusion, d'un message identifiant ce canal de diffusion ;
- une étape de réception en provenance du serveur de données d'information relatives à :
   ∘ au moins un programme diffusé par le canal de diffusion identifié dans le message ; et/ou
   ∘ au moins un autre canal de diffusion associé au canal de diffusion identifié dans le message ; et
- une étape de transmission, via le premier réseau, de ces données d'information à un terminal muni d'un module de communication sur le premier réseau et connecté à la passerelle.

Corrélativement, l'invention vise aussi, premièrement, une passerelle apte à relier un premier réseau de télécommunications à un second réseau de télécommunications, cette passerelle étant connectée à un dispositif de restitution audio et/ou vidéo et à un terminal muni d'un module de communication sur le premier réseau, ladite passerelle comprenant :
- un module de détection d'un canal de diffusion (i.e. chaîne de diffusion) diffusant un programme audio et/ou vidéo restitué par le dispositif de restitution ;
- un module d'envoi, via le second réseau, à destination d'un serveur ayant accès à des données d'informations relatives au moins à ce canal de diffusion, d'un message identifiant ce canal de diffusion ;
- un module de réception en provenance dudit serveur de données d'information relatives à :
   ∘ au moins un programme diffusé par le canal de diffusion identifié dans le message ; et/ou
   ∘ au moins un autre canal de diffusion associé au canal de diffusion identifié dans le message ; et
- un module de transmission, via le premier réseau, de ces données d'information au terminal.

L'invention vise aussi, deuxièmement, un décodeur numérique connecté à un dispositif de restitution audio et/ou vidéo et à une passerelle apte à relier un premier réseau de télécommunications à un second réseau de télécommunications, ledit décodeur numérique comprenant :
- un module de détection d'un canal de diffusion diffusant un programme audio et/ou vidéo restitué par le dispositif de restitution ;
- un module d'envoi, via le second réseau, à destination d'un serveur ayant accès à des données d'informations relatives au moins audit canal de diffusion, d'un message identifiant ce canal de diffusion ;
- un module de réception en provenance dudit serveur de données d'information relatives à :
   ∘ au moins un programme diffusé par le canal de diffusion identifié dans le message ; et/ou
   o au moins un autre canal de diffusion associé au canal de diffusion identifié dans le message ; et
- un module de transmission, via le premier réseau, de ces données d'information à un terminal muni d'un module de communication sur le premier réseau.

Le dispositif de restitution est par exemple une télévision numérique, connectée à une passerelle domestique équipée d'un décodeur numérique, aussi connue sous le nom de « set-top box » en anglais. Le terminal désigne tout type de terminal apte à communiquer sur le premier réseau de télécommunications relié à la passerelle (ex. réseau local), tel que par exemple une tablette numérique, un ordinateur, un téléphone, etc. Le second réseau de télécommunications est de nature quelconque : il peut s'agir par exemple indifféremment d'un réseau fixe (ex. réseau public Internet) ou mobile.

L'invention tire ainsi avantage du fait que la plupart des spectateurs et/ou des auditeurs disposent en parallèle du dispositif qu'ils utilisent pour la restitution de programmes audio et/ou vidéo diffusés par des chaînes de radio et/ou de télévision (canal de diffusion au sens de l'invention), d'une connexion à un réseau externe (ex. réseau public Internet) via un réseau local (ou WLAN (Wireless Local Access Network), filaire ou sans fil) contrôlé par une passerelle résidentielle ou domestique. L'invention propose de mettre à profit cette connexion pour transmettre dynamiquement et en temps réel à l'auditeur et/ou au spectateur des données d'informations complémentaires sur les programmes qu'il écoute et/ou visualise sur son dispositif de restitution.

On obtient ainsi une solution simple permettant d'enrichir dynamiquement les programmes diffusés par les chaînes de diffusion radio et/ou audiovisuelle et s'appuyant sur deux équipements distincts classiquement à la disposition des auditeurs et/ou spectateurs. Cette solution est par conséquent facile à implémenter : elle ne requiert en effet qu'une programmation idoine du terminal et de la passerelle, via par exemple une application logicielle.

Elle offre en outre une grande flexibilité par rapport au type d'informations complémentaires pouvant être transmises à l'auditeur et/ou spectateur, puisque ces informations sont transmises directement sur son terminal et non plus sur le dispositif de restitution audio et/ou vidéo. L'invention ne souffre ainsi plus des problèmes de limitation de la bande passante de l'état de la technique. De ce fait, les données d'informations complémentaires transmises au terminal peuvent être de natures très diverses, telles que des fichiers audio et/ou vidéo (ex. fichiers audiovisuels), des fichiers textes, des jeux, des informations sur un autre canal de diffusion ayant une programmation liée à la programmation du canal de diffusion, mais également des données suscitant une interactivité avec l'auditeur et/ou le spectateur (ex. bouton de vote, liste d'éléments dont l'un au moins des éléments est destiné à être sélectionné par un utilisateur du terminal, etc.), rendues possibles par l'usage du terminal.

Dans un mode particulier de réalisation, les données d'information relatives audit au moins un programme diffusé par le canal de diffusion identifié dans le message comprennent des données relatives au programme restitué sur le dispositif de restitution au moment de la réception de ces données d'information.

La transmission des données d'information conformément à l'invention est avantageusement transparente pour l'auditeur et/ou le spectateur. Elle se fait à son insu, en mode « push » sur le terminal (i.e. automatique, sans requête particulière de sa part), dès lors que la passerelle est en mesure d'identifier quel canal de diffusion est restitué sur le dispositif de restitution. L'auditeur et/ou le spectateur n'a pas besoin d'activer cette transmission via l'appui d'un bouton dédié d'une télécommande, ni de se connecter à un site web externe pour obtenir ces données d'information. L'accès aux données d'information complémentaires est ainsi facilité pour l'auditeur et/ou le spectateur, et les ressources de son terminal sont préservées grâce à ce mode « push ».

Par ailleurs, la transmission des informations complémentaires vers le terminal est dynamique et s'effectue en temps réel : elle peut ainsi s'adapter avantageusement au programme courant du canal de diffusion restitué par le dispositif de restitution (c'est-à-dire au programme en cours de diffusion par le canal de diffusion). L'auditeur et/ou le spectateur peut ainsi bénéficier en temps réel d'informations pertinentes et actuelles sur le programme qui lui est restitué.

Dans un mode particulier de réalisation, la restitution du programme audio et/ou vidéo diffusé par le canal de diffusion sur le dispositif de restitution est réalisée sous contrôle de la passerelle.

Ceci est le cas par exemple lorsque la passerelle est équipée d'un décodeur numérique, connu en soi, qui transmet au dispositif de restitution un signal décodé contenant le programme audio et/ou vidéo diffusé par le canal de diffusion sélectionné par l'utilisateur du dispositif de restitution. L'étape de détection par la passerelle du canal de diffusion sélectionné par l'utilisateur du dispositif de restitution est ainsi grandement facilitée, et quasi-automatique. La passerelle n'a en effet à cette fin qu'à identifier le canal de diffusion qu'elle décode et transmet en direction du dispositif de restitution.

En outre, ceci permet à la passerelle de détecter aisément tout changement de canal de diffusion décidé par l'utilisateur du dispositif de restitution de sorte à adapter les informations complémentaires fournies au terminal au programme effectivement restitué à l'utilisateur. Ainsi par exemple, l'étape de détection peut comprendre une étape de réception par la passerelle d'une requête de changement du canal de diffusion dont un programme audio et/ou vidéo est restitué par le dispositif de restitution.

Dans un autre mode de réalisation, l'étape d'envoi du message au serveur et/ou l'étape de transmission au terminal sont activées si le canal de diffusion dont un programme audio et/ou vidéo est restitué par le dispositif de restitution reste inchangé pendant au moins une durée prédéterminée.

Comme mentionné précédemment, l'invention permet d'adapter dynamiquement les données d'informations transmises à l'auditeur et/ou au spectateur en fonction du canal de diffusion, voire du programme restitué à l'instant considéré sur son dispositif de restitution. Ce programme peut être amené à changer notamment parce que l'auditeur et/ou le spectateur a décidé de changer de canal de diffusion. Ce mode de réalisation vise ainsi à éviter la récupération auprès du serveur et l'envoi intempestif de données d'informations complémentaires sur le terminal lorsque l'auditeur et/ou le spectateur « zappe » d'une chaîne à l'autre (autrement dit, sélectionne successivement des chaînes différentes, à chaque fois pour une très courte durée), et ce, en fixant de manière adéquate la durée prédéterminée. On économise par ce biais les ressources de la passerelle, du serveur et du terminal (notamment en termes de bande passante).

A cet effet, par ailleurs, l'étape de détection peut être mise en œuvre périodiquement pour permettre à la passerelle de détecter tout changement de chaîne par l'utilisateur du dispositif de restitution.

La mise en œuvre d'une détection périodique permet également à la passerelle d'activer régulièrement auprès du serveur la transmission d'informations complémentaires vers le terminal si de nouvelles informations sont disponibles auprès du serveur.

En variante, le serveur peut être à l'initiative d'une transmission régulière ou ponctuelle d'informations complémentaires vers la passerelle tant que celle-ci ne lui a pas signalé de changement dans le canal de diffusion restitué sur le dispositif de restitution.

Ceci permet notamment d'adapter les informations complémentaires au programme effectivement restitué sur le dispositif de restitution, si celui-ci est amené à changer en dépit de l'absence d'un changement de canal de diffusion. Lorsque le programme restitué sur le dispositif de restitution reste inchangé, cela permet de compléter des données d'informations déjà fournies au terminal sur le programme, et d'adapter par exemple les données d'informations fournies en fonction de la progression de ce programme.

Dans un mode particulier de réalisation, les différentes étapes du procédé de transmission sont déterminées par des instructions de programmes d'ordinateurs.

En conséquence, l'invention vise aussi un programme d'ordinateur sur un support d'informations, ce programme étant susceptible d'être mis en œuvre dans une passerelle ou plus généralement dans un ordinateur, ce programme comportant des instructions adaptées à la mise en œuvre des étapes d'un procédé de transmission tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un autre aspect, l'invention vise un système de communications comprenant :
- un dispositif de restitution audio et/ou vidéo ;
- un terminal muni d'un module de communication sur un premier réseau de télécommunications ;
- une passerelle selon l'invention apte à relier le premier réseau de télécommunications à un second réseau de télécommunications, et connectée au dispositif de restitution et au terminal, et/ou un décodeur numérique tel que décrit succinctement ci-dessus ; et
- au moins un serveur accessible via le second réseau de télécommunications, ce serveur ayant accès à des données d'information relatives à au moins un canal de diffusion diffusant au moins un programme audio et/ou vidéo susceptible d'être restitué sur le dispositif de restitution.

Le système de communications bénéficie des mêmes avantages cités précédemment que le procédé de transmission et la passerelle.

Dans un mode particulier de réalisation, les données d'information auxquelles a accès le serveur sont actualisées en temps réel, typiquement par les opérateurs des chaînes diffusant les programmes audio et/ou vidéo qu'elles concernent.

Ceci permet de garantir la pertinence des informations complémentaires fournies à l'auditeur et/au spectateur par rapport au programme en cours de restitution. En outre, l'invention facilite la transmission d'informations suscitant une interactivité avec l'auditeur et/ou le spectateur et qui peuvent varier au cours du programme.

D'autre part, ceci permet d'améliorer la réactivité du serveur en réponse au message reçu de la passerelle : le serveur n'a en effet pas besoin de contrôler l'actualité des données auxquelles il a accès, ni le programme concerné, ni même de consulter sur réception du message de la passerelle des serveurs externes pour détecter si des mises à jour des données existent.

Dans une variante de réalisation, le terminal est en outre muni d'un module de restitution d'au moins une partie des données d'information transmises par la passerelle et/ou être muni d'un module de stockage d'au moins une partie des données d'information transmises par la passerelle.

Cette variante permet à l'auditeur et/ou au spectateur d'accéder aux données d'information qui lui sont transmises par la passerelle durant la restitution du programme ou ultérieurement.

On peut également envisager, dans d'autres modes de réalisation, que le procédé de transmission, la passerelle et le système selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, de façon schématique, un système de communications et une passerelle selon l'invention dans un mode particulier de réalisation ;
- la figure 2 représente, de façon schématique, l'architecture matérielle de la passerelle illustrée à la figure 1 ;
- la figure 3 représente, de façon schématique, l'architecture matérielle d'un terminal relié à la passerelle de la figure 1 ;
- la figure 4 représente, sous forme d'organigramme, les principales étapes d'un procédé de transmission selon l'invention telles que mises en œuvre par la passerelle de la figure 1.

### Description détaillée de l'invention

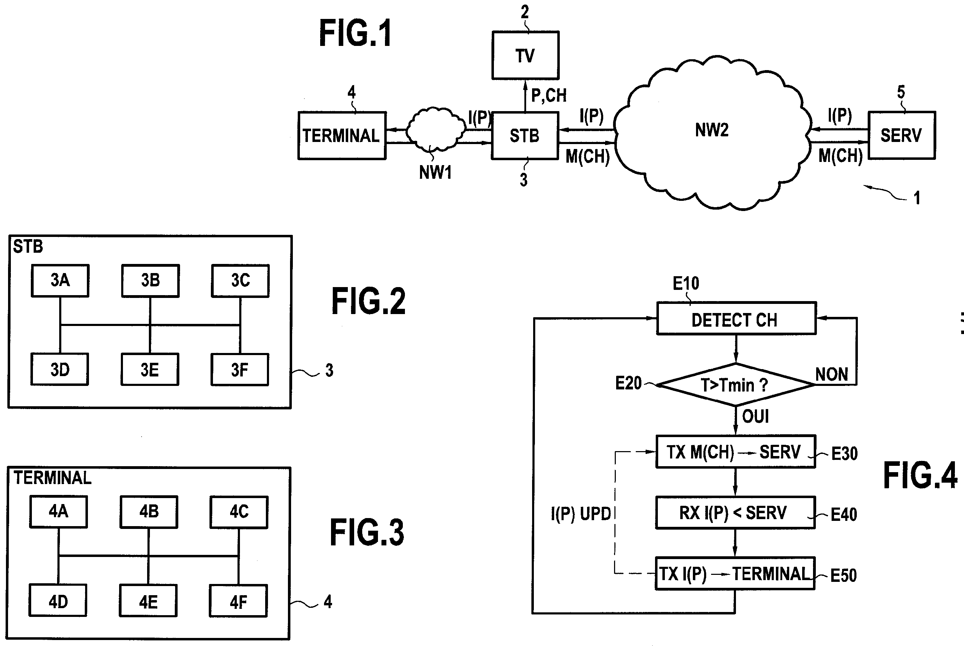

La **figure 1** représente un système de communications 1 selon l'invention, dans un mode particulier de réalisation.

Conformément à l'invention, le système de communications 1 permet d'enrichir, avec des données d'information complémentaires, des programmes audio et/ou vidéo diffusés par des chaînes de diffusion radio et/ou de télévision (canaux de diffusion au sens de l'invention), et restitués par un dispositif de restitution 2 à un utilisateur ou un groupe d'utilisateurs. A cet effet, le système de communications 1 s'appuie sur :
- une passerelle 3 conforme à l'invention, connectée au dispositif de restitution 2 ;
- un terminal 4 connecté à la passerelle 3, auquel sont fournies les données d'information complémentaires sur les programmes restitués par le dispositif de restitution 2 pour présentation à l'utilisateur du dispositif de restitution 2 ; et
- un serveur 5 ayant accès à des données d'information complémentaires relatives à diverses chaînes de diffusion et plus spécifiquement à divers programmes audio et/ou vidéo diffusés par ces chaînes de diffusion, et mises à disposition du serveur 5 par celles-ci (ou plus précisément par les opérateurs de ces chaînes de diffusion).

Dans le mode de réalisation décrit ici, le dispositif de restitution 2 est une télévision numérique et la passerelle 3 est une passerelle domestique 3 équipée d'un décodeur numérique. Une telle passerelle est aussi connue sous le nom de set-top box. La diffusion d'un programme audio et/ou vidéo P diffusé par une chaîne ou un canal de diffusion CH sur le dispositif de restitution 2 s'effectue ainsi par l'intermédiaire de la passerelle domestique 3, autrement dit sous son contrôle.

Plus précisément et de façon connue en soi, la passerelle domestique 3 reçoit des programmes audio et/ou vidéo d'une ou de plusieurs chaînes de radio et/ou de télévision sous la forme de signaux codés (i.e. flux ou signaux compressés afin d'économiser la bande passante, par exemple sous un format MPEG-2 (Moving Picture Expert Group) ou MPEG-4), via ici un réseau de télécommunications NW2 (second réseau au sens de l'invention). Le réseau NW2 est par exemple ici, de façon non limitative, le réseau public Internet. Le décodeur numérique de la passerelle domestique 3 réalise alors le décodage nécessaire des signaux codés relatifs au canal de diffusion choisi par l'utilisateur du dispositif de restitution 2 (via par exemple la télécommande du décodeur numérique), afin de transmettre le programme diffusé sur ce canal de diffusion au dispositif de restitution 2 dans un format compatible avec ce dernier. Le dispositif de restitution 2 peut ensuite procéder à la restitution du programme ainsi reçu du décodeur numérique auprès de l'utilisateur.

La passerelle domestique 3 est connectée ici au terminal 4 via un réseau local NW1 (premier réseau au sens de l'invention). Le réseau NW1 est par exemple, de façon non limitative, un réseau local sans fil ou WiFI (Wireless FIdelity). La passerelle domestique 3 relie ainsi de façon connue le réseau local NW1 au second réseau NW2.

Dans le mode de réalisation décrit ici, la passerelle 3 dispose de l'architecture matérielle d'un ordinateur telle qu'illustrée schématiquement à la **figure 2****.** Elle comprend notamment un processeur 3A, une mémoire morte 3B, une mémoire vive 3C, une mémoire non volatile 3D, un décodeur numérique 3E tel que mentionné précédemment, et des moyens de communication 3F sur le réseau local NW1 et sur le réseau NW2. Ces moyens de communication 3F intègrent par exemple une carte réseau et un module de communication WiFI, connus en soi et non détaillés ici.

La mémoire morte 3B de la passerelle 3 constitue un support d'enregistrement conforme à l'invention, lisible par le processeur 3A et sur lequel est enregistré un programme d'ordinateur conforme à l'invention, comportant des instructions pour l'exécution des étapes d'un procédé de traitement conforme à l'invention, les étapes de ce procédés étant décrites ultérieurement en référence à la figure 4 dans un mode particulier de réalisation.

Ce programme d'ordinateur définit de façon correspondante des modules fonctionnels de la passerelle 3 aptes à mettre en œuvre ces étapes, et en particulier un module de détection d'un canal de diffusion diffusant un programme audio et/ou vidéo restitué sur le dispositif de restitution 2 auquel la passerelle 3 est connectée, un module d'envoi d'un message à destination du serveur 5 identifiant ce canal de diffusion, un module de réception en provenance du serveur 5 de données d'information relatives à un programme du canal de diffusion restitué sur le dispositif de restitution 2 ou à un autre canal de diffusion associé au canal de diffusion restitué sur le dispositif de restitution 2, et un module de transmission des données ainsi reçues au terminal 4. Les modules fonctionnels d'envoi, de réception et de transmission s'appuient sur (i.e. utilisent) les moyens de communication 3F de la passerelle 3.

Le terminal 4 est un terminal quelconque, tel que par exemple un téléphone intelligent (ou « smartphone » en anglais), une tablette, un ordinateur, etc. Il dispose ici de l'architecture matérielle d'un ordinateur, telle qu'illustrée à la **figure 3****,** et comprend notamment un processeur 4A, une mémoire morte 4B, une mémoire vive 4C, une mémoire non volatile 4D, des moyens de communication 4E sur le réseau local NW1 lui permettant de communiquer avec la passerelle 3 (et intégrant par exemple un module de communication sans fil WiFI, connu en soi), ainsi que des moyens de restitution 4F des données d'information transmises par la passerelle 3 sur les programmes restitués par le dispositif de restitution 2. Ces moyens de restitution 4F comprennent par exemple un écran, un microphone, un clavier, etc. Ils sont, dans le mode de réalisation décrit ici, commandés par une application A, stockée dans la mémoire morte 4B du terminal 4.

Conformément à l'invention, des données d'information complémentaires relatives à un programme audio et/ou vidéo diffusé par un canal de diffusion CH (tel que par exemple au programme P restitué au même moment sur le dispositif de restitution 2) ou à un autre canal de diffusion associé au canal de diffusion CH sont transmises au terminal 4 depuis le serveur 5 via la passerelle domestique 3. Aucune limitation n'est attachée au type de programme P restitué par le dispositif de restitution 2 ni plus généralement au type de programmes dont on obtient des données d'information complémentaires. Ainsi, il peut s'agir aussi bien d'un programme audio ou radio que d'un programme vidéo (i.e. audiovisuel).

Il convient de noter que dans cette description, les expressions « données d'information » et « données d'information complémentaires » relatives à un programme désignent aussi bien des éléments à caractère informatif sur le programme considéré, tels que par exemple des renseignements sur les acteurs lorsque le programme est un film, des références bibliographiques, des documents historiques ou géographiques (ex. carte), ou encore des fichiers audio, vidéo, audiovisuels, des photos, etc., que des choix d'actions associées au programme, tels que la possibilité pour un utilisateur d'effectuer un vote ou de sélectionner un élément parmi une liste d'éléments qui lui est présentée en association avec le programme. Les données complémentaires peuvent également concerner de manière générale toutes autres informations sélectionnées par le canal de diffusion CH, telles que des programmes à venir sur le canal de diffusion, des offres d'abonnement à des chaînes associées au canal de diffusion, des données d'information relatives à des chaînes associées au canal de diffusion et diffusant des programmes en lien avec le programme restitué par le dispositif de restitution, etc. Ainsi, par exemple, si le dispositif de restitution 2 restitue sur un canal de diffusion C1 un film dont l'action se déroule pendant la guerre d'Indochine, l'utilisateur du dispositif de restitution 2 peut être intéressé de savoir qu'une chaîne C2 diffuse prochainement un documentaire sur la guerre d'Indochine ou que la chaîne C3 diffuse prochainement un débat sur ce sujet. Les données d'information complémentaires fournies par la passerelle 3 au terminal 4 proviennent du serveur 5. Celui-ci collecte et stocke ici en continu, dans une mémoire, des données d'information complémentaires fournies par une ou plusieurs chaînes de diffusion (télévision et/ou radio) sur les programmes qu'elles diffusent (incluant le programme P).

Dans le mode de réalisation décrit ici, les données d'information stockées par le serveur 5 sont actualisées en temps réel par les chaînes de diffusion, de sorte à permettre au serveur 5 de disposer en temps réel d'informations pertinentes et actuelles sur les programmes en cours de diffusion sur ces chaînes.

En variante, les données d'information auxquelles a accès le serveur 5 peuvent être mises à jour ponctuellement, par exemple uniquement en cas de modification de ces données ou des programmes diffusés par les chaînes de diffusion (ex. ajout et/ou retrait de données d'information, mise à jour, etc.). La chaîne de diffusion peut également stocker toutes les informations relatives à ses programmes sur le serveur, en mode journalier par exemple.

Selon une autre variante encore, la passerelle détecte le canal de diffusion, puis décode les informations type télétexte envoyées par le canal de diffusion qui désignent le programme, ou consulte une grille temporelle de programmes. La passerelle restitue sur le terminal les informations du serveur relatives à ce programme particulier.

Dans une autre variante encore, les données d'information ne sont pas stockées directement sur le serveur 5, mais celui-ci a accès à ces données d'information auprès de serveurs hébergés et alimentés par les chaînes de diffusion à l'origine de ces données d'information. Le serveur 5 joue alors un rôle d'intermédiaire entre la passerelle 3 et ces serveurs pour obtenir les données d'information relatives au programme considéré.

Nous allons maintenant décrire, en référence à la **figure 4****,** les principales étapes d'un procédé de transmission conforme à l'invention, dans un mode particulier de réalisation dans lequel il est mis en œuvre par la passerelle domestique 3 illustrée à la figure 1.

On suppose en préliminaire que le dispositif de restitution 2 restitue auprès d'un utilisateur, un programme audio et/ou vidéo P diffusé par une chaîne (canal) de diffusion CH sélectionnée par l'utilisateur via la télécommande du décodeur numérique équipant la passerelle domestique 3.

Cette restitution est détectée par la passerelle domestique 3 dès la sélection de la chaîne CH par l'utilisateur du dispositif de restitution 2 (étape E10). En effet et comme mentionné précédemment, la restitution par le dispositif de restitution 2 du programme P diffusé sur la chaîne CH est réalisée par l'intermédiaire de la passerelle domestique 3 et plus particulièrement de son décodeur numérique, de sorte que la passerelle domestique 3 peut aisément détecter la chaîne CH diffusant le programme restitué à cet instant sur le dispositif de restitution 2. Il convient de noter que la sélection du canal CH par l'utilisateur peut être indifféremment une première sélection effectuée par l'utilisateur suite à l'allumage de sa télévision numérique ou faire suite à une requête de changement de chaîne de la part de l'utilisateur.

Dans le mode de réalisation décrit ici, suite à cette détection, la passerelle domestique 3 active un temporisateur pour une durée au moins égale à une durée prédéterminée Tmin et vérifie, à l'issue de cette durée, que le canal de diffusion CH sélectionné par l'utilisateur est toujours restitué par le dispositif de restitution 2 via le décodeur numérique de la passerelle 3 (étape E20).

Le cas échéant (réponse oui à l'étape E20), la passerelle domestique 3 détermine, à partir de l'identifiant CH du canal de diffusion en cours de restitution sur le dispositif de restitution 2, que le serveur 5 a accès à des données d'informations complémentaires concernant les programmes diffusés par le canal de diffusion CH. On suppose par exemple que l'indication portant sur quel(s) serveur(s) contacter le cas échéant pour obtenir de telles données d'information complémentaires sur quelle(s) chaîne(s) de diffusion lui a été communiquée en préliminaire par les chaînes de diffusion.

Conformément à l'invention, la passerelle domestique 3 envoie alors un message M(CH), sur le réseau NW2 via ses moyens de communication 3E, à destination du serveur 5 afin d'obtenir des données d'informations complémentaires sur le canal de diffusion CH, et plus particulièrement ici sur le programme P en cours de restitution, fournies par l'opérateur du canal de diffusion CH (étape E30). Ce message contient un identifiant du canal de diffusion CH.

Sur réception de ce message, le serveur 5 collecte les données d'information dont il dispose dans sa mémoire et qui sont relatives ici aux programmes diffusés sur le canal de diffusion CH. Ces données sont, dans le mode de réalisation décrit ici, mises à jour régulièrement et en temps réel par l'opérateur du canal CH de sorte qu'elles concernent le programme P en cours de restitution par le dispositif de restitution 2. On désigne par I(P) ces données d'information complémentaires.

En variante, les données complémentaires collectées peuvent intégrer des données relatives à des canaux de diffusion associés au canal de diffusion CH et diffusant par exemple des programmes en relation avec le programme P en cours de restitution.

Selon une autre variante encore, la passerelle domestique 3 détecte également le programme P en cours de restitution par le dispositif de restitution 2 et inclut dans le message envoyé au serveur non seulement un identifiant du canal de diffusion CH mais également un identifiant du programme P de sorte à obtenir des données complémentaires relatives à ce programme spécifiquement.

Le serveur 5 transmet à la passerelle 3, via le réseau NW2, les données I(P) ainsi collectées sur le programme P diffusé par le canal de diffusion CH. Ces données sont reçues par la passerelle 3 via ses moyens de communication 3E (étape E40).

La passerelle 3 transmet les données d'information I(P) au terminal 4 sur le réseau NW1 à l'aide de ses moyens de communication 3E (étape E50).

Il convient de noter que dans l'exemple illustré à la figure 1, la passerelle 3 est connectée à un unique terminal (le terminal 4), de sorte que les données I(P) sont envoyées uniquement à ce terminal. Lorsque la passerelle 3 est connectée à plusieurs terminaux, on peut envisager que l'utilisateur sélectionne en préliminaire un terminal (ou plusieurs terminaux) particulier(s) parmi ces terminaux afin de recevoir les données complémentaires relatives au programme restitué sur le dispositif 2 ou en variante que ces données complémentaires soient envoyées à tous les terminaux connectés à la passerelle 3.

Puis la passerelle 3 détecte de nouveau le canal de diffusion en cours de restitution sur le dispositif de restitution 2 (retour à l'étape E10) : cette détection est mise en œuvre, dans le mode de réalisation décrit ici, de manière périodique, afin d'identifier un éventuel changement du canal de diffusion restitué sur le dispositif de restitution 2.

Les données I(P) transmises par la passerelle 3 sont reçues par les moyens de communication 4E du terminal 4 et envoyées à l'application A stockée dans sa mémoire 4B. L'application A propose à l'utilisateur du terminal 4 de voir et/ou écouter ces données immédiatement via les moyens de restitution 4F du terminal 4 ou les stocke dans la mémoire non volatile 4D pour une restitution ultérieure. Ainsi, l'utilisateur du dispositif de restitution 2 a accès à des données complémentaires en temps réel relatives au programme P qu'il écoute et/ou visualise sans avoir besoin de se connecter à un serveur externe. Ces données complémentaires peuvent comprendre, comme mentionné précédemment, des données audiovisuelles, mais également des données amenant une interaction avec l'utilisateur via son terminal 4. Ainsi, par exemple, elles peuvent intégrer une application proposant une interface avec l'utilisateur de sorte à lui permettre d'effectuer un vote et/ou de sélectionner un élément parmi une liste d'éléments. La réponse de l'utilisateur via son terminal 4 est ensuite transmise au serveur 5 par l'intermédiaire de la passerelle 3 via respectivement les réseaux NW1 et NW2.

Dans le mode de réalisation décrit ici, l'envoi du message M(CH) par la passerelle 3 au serveur 5 est conditionné par le fait que le choix du canal CH par l'utilisateur reste inchangé pendant une durée supérieure à une durée prédéterminée Tmin, afin de s'assurer de la stabilité du choix de l'utilisateur et de ne pas solliciter de façon intempestive le serveur 5 lorsque l'utilisateur zappe d'un canal de diffusion à un autre. Dans une variante, on peut envisager que non seulement l'envoi du message M(CH) soit ainsi conditionné mais également l'envoi des données d'informations I(P) au terminal 4 afin de préserver la bande passante et d'éviter la transmission intempestive d'informations au terminal 4 susceptibles de ne pas intéresser l'utilisateur du dispositif de restitution 2.

Par ailleurs, dans l'exemple illustré ici, les données d'informations complémentaires I(P) sont transmises par le serveur 5 en réponse au message M(CH) envoyé par la passerelle 3, autrement dit suite à la détection de la diffusion du canal CH par la passerelle 3. On peut bien entendu envisager que des données complémentaires relatives au programme P restitué par le dispositif de restitution 2 soient en outre envoyées périodiquement et/ou ponctuellement par le serveur 5 à la passerelle 3 puis transmises par celle-ci au terminal 4, tant que le canal de diffusion restitué sur le dispositif de restitution 2 reste inchangé. Il s'agit par ce biais de s'assurer que toutes les données mises à disposition du serveur 5 par l'opérateur du canal de diffusion CH soient transmises à l'utilisateur.

Dans le mode de réalisation décrit ici, le dispositif de restitution 2 est une télévision numérique. L'invention peut toutefois s'appliquer à d'autres types de dispositifs de restitution en fonction notamment du type de programme que l'on souhaite enrichir, dès lors que la passerelle domestique 3 est connecté au dispositif de restitution 2, et est en mesure de déterminer quel programme, le cas échéant, est en cours de restitution sur celui-ci.

On notera que diverses configurations de système sont possibles dans le cadre de la présente invention. Ainsi, la passerelle et le décodeur numérique peuvent être deux appareils distincts interconnectés par une liaison filaire ou non-filaire. Dans ce cas de deux appareils distincts, à titre d'exemple, le décodeur numérique détecte le canal de diffusion CH et envoie un identifiant du canal de diffusion CH à la passerelle, qui utilise cette information pour former le message M(CH) envoyé au serveur 5 ; en variante, c'est le décodeur numérique lui-même qui forme le message M(CH) après avoir détecté le canal de diffusion CH, lequel est envoyé ensuite par la passerelle à destination du serveur 5. Alternativement, la passerelle peut détecter le canal de diffusion CH et former le message M(CH) qu'elle envoie au serveur 5, sans impliquer le décodeur numérique dans ces opérations.

## Revendications

1. Procédé de transmission dynamique de données d'information relatives à un programme audio et/ou vidéo, ledit procédé étant **caractérisé en ce qu'**il est mis en œuvre par une passerelle (3) apte à relier un premier réseau de télécommunications (NW1) à un second réseau de télécommunications (NW2) et optionnellement par un décodeur numérique connecté à ladite passerelle, le procédé de transmission comprenant :
- une étape de détection (E10) d'un canal de diffusion (CH) diffusant un programme audio et/ou vidéo restitué au même moment par un dispositif de restitution audio et/ou vidéo (2), ledit programme étant reçu par ladite passerelle (3) via ledit second réseau de télécommunications (NW2) ;
- une étape d'envoi (E30), via le second réseau, à destination d'un serveur (5) ayant accès à des données d'informations relatives au moins audit canal de diffusion, d'un message (M(CH)) identifiant ce canal de diffusion ;
- une étape de réception (E40) en provenance dudit serveur de données d'information (I(P)) relatives à :
∘ au moins un programme diffusé par le canal de diffusion identifié dans le message ; et/ou
∘ au moins un autre canal de diffusion associé au canal de diffusion identifié dans le message ; et
- une étape de transmission (E50), via le premier réseau, de ces données d'information à un terminal muni d'un module de communication sur le premier réseau et connecté à ladite passerelle, ledit terminal et ledit dispositif de restitution étant des équipements distincts.

2. Procédé selon la revendication 1 dans lequel lesdites données d'information relatives audit au moins un programme diffusé par le canal de diffusion identifié dans le message comprennent des données relatives au programme restitué sur le dispositif de restitution au moment de la réception desdites données d'information.

3. Procédé selon la revendication 1 ou 2 dans lequel la restitution du programme audio et/ou vidéo diffusé par le canal de diffusion sur le dispositif de restitution est réalisée sous contrôle de la passerelle (3)

4. Procédé selon la revendication 3 dans lequel l'étape de détection (E10) comprend une étape de réception par la passerelle d'une requête de changement du canal de diffusion dont un programme audio et/ou vidéo est restitué par le dispositif de restitution.

5. Procédé selon l'une quelconque des revendications 1 à 4 dans lequel l'étape d'envoi (E30) du message au serveur et/ou l'étape de transmission (E50) au terminal sont activées si (E20) le canal de diffusion dont un programme audio et/ou vidéo est restitué par le dispositif de restitution reste inchangé pendant au moins une durée prédéterminée (Tmin).

6. Procédé selon l'une quelconque des revendications 1 à 5 dans lequel l'étape de détection est mise en œuvre périodiquement.

7. Procédé selon l'une quelconque des revendications 1 à 6 dans lequel lesdites données d'information relatives audit au moins un programme comprennent une liste d'éléments, l'un au moins desdits éléments étant destiné à être sélectionné par un utilisateur du terminal.

8. Procédé selon l'une quelconque des revendications 1 à 7 dans lequel lesdites données d'information transmises au terminal comprennent des données suscitant, de la part de l'utilisateur du terminal, une réponse qui est transmise, par l'intermédiaire de la passerelle (3), via le premier télécommunications (NW1) puis le second réseau de télécommunications (NW2).

9. Programme d'ordinateur comportant des instructions pour l'exécution des étapes du procédé de transmission selon l'une quelconque des revendications 1 à 8 lorsque ledit programme est exécuté par un ordinateur.

10. Support d'enregistrement lisible par un ordinateur sur lequel est enregistré un programme d'ordinateur comprenant des instructions pour l'exécution des étapes du procédé de transmission selon l'une quelconque des revendications 1 à 8.

11. Passerelle (3) apte à relier un premier réseau de télécommunications à un second réseau de télécommunications, ladite passerelle étant connectée à un dispositif de restitution audio et/ou vidéo et à un terminal muni d'un module de communication sur le premier réseau, ladite passerelle comprenant :
- un module de détection d'un canal de diffusion diffusant un programme audio et/ou vidéo restitué par le dispositif de restitution, ledit programme étant reçu par ladite passerelle (3) via ledit second réseau de télécommunications (NW2) ;
- un module d'envoi, via le second réseau, à destination d'un serveur ayant accès à des données d'informations relatives au moins audit canal de diffusion, d'un message identifiant ce canal de diffusion ;
- un module de réception en provenance dudit serveur de données d'information relatives à :
∘ au moins un programme diffusé par le canal de diffusion identifié dans le message ; et/ou
∘ au moins un autre canal de diffusion associé au canal de diffusion identifié dans le message ; et
- un module de transmission, via le premier réseau, de ces données d'information au terminal, ledit terminal et ledit dispositif de restitution étant des équipements distincts.

12. Décodeur numérique connecté à un dispositif de restitution audio et/ou vidéo et à une passerelle apte à relier un premier réseau de télécommunications à un second réseau de télécommunications, ledit décodeur numérique comprenant :
- un module de détection d'un canal de diffusion diffusant un programme audio et/ou vidéo restitué par le dispositif de restitution ;
- un module d'envoi, via le second réseau, à destination d'un serveur ayant accès à des données d'informations relatives au moins audit canal de diffusion, d'un message identifiant ce canal de diffusion ;
- un module de réception en provenance dudit serveur de données d'information relatives à :
∘ au moins un programme diffusé par le canal de diffusion identifié dans le message ; et/ou
∘ au moins un autre canal de diffusion associé au canal de diffusion identifié dans le message ; et
- un module de transmission, via le premier réseau, de ces données d'information à un terminal muni d'un module de communication sur le premier réseau, ledit terminal et ledit dispositif de restitution étant des équipements distincts.

13. Système de communications (1) comprenant :
- un dispositif de restitution audio et/ou vidéo (2) ;
- un terminal (4) muni d'un module de communication sur un premier réseau de télécommunications ;
- une passerelle (3) selon la revendication 11 apte à relier le premier réseau de télécommunications à un second réseau de télécommunications, et connectée au dispositif de restitution et au terminal, et/ou un décodeur numérique selon la revendication 12 ; et
- au moins un serveur (5) accessible via le second réseau de télécommunications, ledit serveur ayant accès à des données d'information relatives à au moins un canal de diffusion diffusant au moins un programme audio et/ou vidéo susceptible d'être restitué sur le dispositif de restitution.

14. Système de communications selon la revendication 13 dans lequel lesdites données d'information auxquelles a accès le serveur sont actualisées en temps réel.

15. Système de communications selon la revendication 13 ou 14 dans lequel le terminal est en outre muni d'un module de restitution (4F) d'au moins une partie des données d'information transmises par la passerelle et/ou d'un module de stockage d'au moins une partie des données d'information transmises par la passerelle.

## Patentansprüche

1. Verfahren zur dynamischen Übertragung von Informationsdaten bezogen auf ein Audio- und/oder Videoprogramm, wobei das Verfahren **dadurch gekennzeichnet ist, dass** es durch einen Gateway (3), der geeignet ist, ein erstes Telekommunikationsnetzwerk (NW1) mit einem zweiten Telekommunikationsnetzwerk (NW2) zu verbinden, und optional durch einen digitalen Decodierer, der mit dem Gateway verbunden ist, durchgeführt wird, das Übertragungsverfahren umfassend:
- einen Schritt des Erfassens (E10) eines Verbreitungskanals (CH), der ein Audio- und/oder Videoprogramm verbreitet, das zum selben Zeitpunkt durch eine Audio- und/oder Videowiedergabevorrichtung (2) wiedergegeben wird, wobei das Programm durch den Gateway (3) über das zweite Telekommunikationsnetzwerk (NW2) empfangen wird;
- einen Schritt des Sendens (E30) einer Nachricht (M(CH)), die diesen Verbreitungskanal identifiziert, über das zweite Netzwerk an einen Server (5), der auf Informationen bezogen auf zumindest den Verbreitungskanal Zugriff hat;
- einen Schritt des Empfangens (E40), von dem Server, von Informationsdaten (I(P)) bezogen auf:
∘ mindestens ein Programm, das durch den Verbreitungskanal verbreitet wird, der in der Nachricht identifiziert ist; und/oder
∘ mindestens einen anderen Verbreitungskanal, der dem Verbreitungskanal zugeordnet ist, der in der Nachricht identifiziert ist; und
- einen Schritt des Übertragens (E50) dieser Informationsdaten über das erste Netzwerk an ein Endgerät, das mit einem Modul zur Kommunikation im ersten Netzwerk versehen ist und mit dem Gateway verbunden ist, wobei das Endgerät und die Wiedergabevorrichtung gesonderte Geräte sind.

2. Verfahren nach Anspruch 1, wobei die Informationsdaten bezogen auf das mindestens eine Programm, das durch den Verbreitungskanal verbreitet wird, der in der Nachricht identifiziert ist, Daten bezogen auf das Programm umfassen, das auf der Wiedergabevorrichtung zum Zeitpunkt des Empfangs der Informationsdaten wiedergegeben wird.

3. Verfahren nach Anspruch 1 oder 2, wobei die Wiedergabe des Audio- und/oder Videoprogramms, das durch den Verbreitungskanal verbreitet wird, auf der Wiedergabevorrichtung unter Steuerung des Gateways (3) durchgeführt wird.

4. Verfahren nach Anspruch 3, wobei der Schritt des Erfassens (E10) einen Schritt des Empfangens, durch den Gateway, einer Anforderung zur Änderung des Verbreitungskanals umfasst, von welchem ein Audio- und/oder Videoprogramm durch die Wiedergabevorrichtung wiedergegeben wird.

5. Verfahren nach einem der Ansprüche 1 bis 4, wobei der Schritt des Sendens (E30) der Nachricht an den Server und/oder der Schritt des Übertragens (E50) an das Endgerät aktiviert werden, wenn (E20) der Verbreitungskanal, von welchem ein Audio- und/oder Videoprogramm durch die Wiedergabevorrichtung wiedergegeben wird, während wenigstens einer vorbestimmten Dauer (Tmin) unverändert bleibt.

6. Verfahren nach einem der Ansprüche 1 bis 5, wobei der Schritt des Erfassens periodisch durchgeführt wird.

7. Verfahren nach einem der Ansprüche 1 bis 6, wobei die Informationsdaten bezogen auf das mindestens eine Programm eine Liste mit Elementen umfassen, wobei mindestens eins der Elemente dazu bestimmt ist, von einem Benutzer des Endgeräts ausgewählt zu werden.

8. Verfahren nach einem der Ansprüche 1 bis 7, wobei die Informationsdaten, die an das Endgerät übertragen werden, Daten umfassen, die seitens des Benutzers des Endgeräts eine Antwort hervorrufen, die mittels des Gateways (3) über die erste Telekommunikation (NW1), dann das zweite Telekommunikationsnetzwerk (NW2) übertragen wird.

9. Computerprogramm, aufweisend Anweisungen für die Ausführung der Schritte des Übertragungsverfahrens nach einem der Ansprüche 1 bis 8, wenn das Programm von einem Computer ausgeführt wird.

10. Computerlesbares Speichermedium, auf dem ein Computerprogramm gespeichert ist, das Anweisungen für die Ausführung der Schritte des Übertragungsverfahrens nach einem der Ansprüche 1 bis 8 umfasst.

11. Gateway (3), der geeignet ist, ein erstes Telekommunikationsnetzwerk mit einem zweiten Telekommunikationsnetzwerk zu verbinden, wobei der Gateway mit einer Audio- und/oder Videowiedergabevorrichtung und mit einem Endgerät, das mit einem Modul zur Kommunikation im ersten Netzwerk versehen ist, verbunden ist, der Gateway umfassend:
- ein Modul zur Erfassung eines Verbreitungskanals, der ein Audio- und/oder Videoprogramm verbreitet, das durch die Wiedergabevorrichtung wiedergegeben wird, wobei das Programm durch den Gateway (3) über das zweite Telekommunikationsnetzwerk (NW2) empfangen wird;
- ein Modul zum Senden einer Nachricht, die diesen Verbreitungskanal identifiziert, über das zweite Netzwerk an einen Server, der auf Informationsdaten bezogen auf zumindest den Verbreitungskanal Zugriff hat;
- einen Modul zum Empfang, von dem Server, von Informationsdaten bezogen auf:
∘ mindestens ein Programm, das durch den Verbreitungskanal verbreitet wird, der in der Nachricht identifiziert ist;
und/oder
∘ mindestens einen anderen Verbreitungskanal, der dem Verbreitungskanal zugeordnet ist, der in der Nachricht identifiziert ist; und
- ein Modul zur Übertragung dieser Informationsdaten über das erste Netzwerk an das Endgerät, wobei das Endgerät und die Wiedergabevorrichtung gesonderte Geräte sind.

12. Digitaler Decodierer, der mit einer Audio- und/oder Videowiedergabevorrichtung und mit einem Gateway, der geeignet ist, ein erstes Telekommunikationsnetzwerk mit einem zweiten Telekommunikationsnetzwerk zu verbinden, verbunden ist, der digitale Decodierer umfassend:
- ein Modul zur Erfassung eines Verbreitungskanals, der ein Audio- und/oder Videoprogramm verbreitet, das durch die Wiedergabevorrichtung wiedergegeben wird;
- ein Modul zum Senden einer Nachricht, die diesen Verbreitungskanal identifiziert, über das zweite Netzwerk an einen Server, der auf Informationsdaten bezogen auf zumindest den Verbreitungskanal Zugriff hat;
- einen Modul zum Empfang, von dem Server, von Informationsdaten bezogen auf:
∘ mindestens ein Programm, das durch den Verbreitungskanal verbreitet wird, der in der Nachricht identifiziert ist; und/oder
∘ mindestens einen anderen Verbreitungskanal, der dem Verbreitungskanal zugeordnet ist, der in der Nachricht identifiziert ist; und
- ein Modul zur Übertragung dieser Informationsdaten über das erste Netzwerk an ein Endgerät, das mit einem Modul zur Kommunikation im ersten Netzwerk versehen ist, wobei das Endgerät und die Wiedergabevorrichtung gesonderte Geräte sind.

13. Kommunikationssystem (1) umfassend:
- eine Audio- und/oder Videowiedergabevorrichtung (2) ;
- ein Endgerät (4), das mit einem Modul zur Kommunikation im ersten Telekommunikationsnetzwerk versehen ist;
- einen Gateway (3) nach Anspruch 11, der geeignet ist, das erste Telekommunikationsnetzwerk mit einem zweiten Telekommunikationsnetzwerk zu verbinden und mit der Wiedergabevorrichtung und dem Endgerät verbunden ist, und/oder einen digitalen Decodierer nach Anspruch 12; und
- mindestens einen Server (5), auf den über das zweite Telekommunikationsnetzwerk zugegriffen werden kann, wobei der Server auf Informationsdaten bezogen auf mindestens einen Verbreitungskanal Zugriff hat, der mindestens ein Audio- und/oder Videoprogramm verbreitet, das auf der Wiedergabevorrichtung wiedergegeben werden kann.

14. Kommunikationssystem nach Anspruch 13, wobei die Informationsdaten, auf die der Server Zugriff hat, in Echtzeit aktualisiert werden.

15. Kommunikationssystem nach Anspruch 13 oder 14, wobei das Endgerät ferner mit einem Modul zur Wiedergabe (4F) zumindest eines Teils der Informationsdaten, die durch den Gateway übertragen werden, und/oder mit einem Modul zur Speicherung zumindest eines Teils der Informationsdaten, die durch den Gateway übertragen werden, versehen ist.

## Claims

1. Method for dynamically transmitting information data relating to an audio/video programme, said method being **characterized in that** it is implemented by a gateway (3) able to link a first telecommunication network (NW1) to a second telecommunication network (NW2) and optionally by a digital decoder connected to said gateway, the transmitting method comprising:
- a step (E10) of detecting a broadcasting channel (CH) broadcasting an audio and/or video programme rendered at the same time by an audio and/or video rendering device, said programme being received by said gateway (3) via said second telecommunication network (NW2);
- a step (E30) of sending, via the second network, to a server (5) having access to information data relating to at least said broadcasting channel, a message (M(CH)) identifying this broadcasting channel;
- a step (E40) of receiving from said server information data (I(P)) relating to:
∘ at least one programme broadcast by the broadcasting channel identified in the message; and/or
∘ at least one other broadcasting channel associated with the broadcasting channel identified in the message; and
- a step (E50) of transmitting, via the first network, these information data to a terminal equipped with a communication module for communicating with the first network and connected to said gateway, said terminal and said rendering device being separate equipments.

2. Method according to Claim 1, wherein said information data relating to said at least one programme broadcast by the broadcasting channel identified in the message comprise data relating to the programme rendered on the rendering device at the time of reception of said information data.

3. Method according to Claim 1 or 2, wherein the audio and/or video programme broadcast by the broadcasting channel on the rendering device is rendered under the control of the gateway (3).

4. Method according to Claim 3, wherein the detecting step (E10) comprises a step in which the gateway receives a request to change the broadcasting channel an audio and/or video programme of which is being rendered by the rendering device.

5. Method according to any one of Claims 1 to 4, wherein the step (E30) of sending the message to the server and/or the step (E50) of transmitting to the terminal are activated (E20) if the broadcasting channel an audio and/or video programme of which is being rendered by the rendering device remains unchanged for at least a preset time (Tmin).

6. Method according to any one of Claims 1 to 5, wherein the detecting step is carried out periodically.

7. Method according to any one of Claims 1 to 6, wherein said information data relating to said at least one programme comprise a list of elements, one at least of said elements being intended to be selected by a user of the terminal.

8. Method according to any one of Claims 1 to 7, wherein said information data transmitted to the terminal comprise data inciting, on the part of the user of the terminal, a response that is transmitted, by way of the gateway (3), via the first telecommunication (NW1) then the second telecommunication network (NW2).

9. Computer program containing instructions for the execution of the steps of the transmitting method according to any one of Claims 1 to 8 when said program is executed by a computer.

10. Computer-readable storage medium on which is stored a computer program containing instructions for executing the steps of the transmitting method according to any one of Claims 1 to 8.

11. Gateway (3) able to link a first telecommunication network to a second telecommunication network, said gateway being connected to a device for rendering audio and/or video and to a terminal equipped with a communication module for communicating with the first network, said gateway comprising:
- a module for detecting a broadcasting channel broadcasting an audio and/or video programme rendered by the rendering device, said programme being received by said gateway (3) via said second telecommunication network (NW2);
- a module for sending, via the second network, to a server having access to information data relating to at least said broadcasting channel, a message identifying this broadcasting channel;
- a module for receiving from said server information data relating to:
∘ at least one programme broadcast by the broadcasting channel identified in the message; and/or
∘ at least one other broadcasting channel associated with the broadcasting channel identified in the message; and
- a module for transmitting, via the first network, these information data to the terminal, said terminal and said rendering device being separate equipments.

12. Digital decoder connected to a device for rendering audio and/or video and to a gateway able to link a first telecommunication network to a second telecommunication network, said digital decoder comprising
- a module for detecting a broadcasting channel broadcasting an audio and/or video programme rendered by the rendering device;
- a module for sending, via the second network, to a server having access to information data relating to at least said broadcasting channel, a message identifying this broadcasting channel;
- a module for receiving from said server information data relating to:
∘ at least one programme broadcast by the broadcasting channel identified in the message; and/or
∘ at least one other broadcasting channel associated with the broadcasting channel identified in the message; and
- a module for transmitting, via the first network, these information data to a terminal equipped with a communication module for communicating with the first network, said terminal and said rendering device being separate equipments.

13. Communication system (1) comprising:
- a device (2) for rendering audio and/or video;
- a terminal (4) equipped with a communication module for communicating with the first network;
- a gateway (3) according to Claim 11 able to link the first telecommunication network to a second telecommunication network , and connected to the rendering device and to the terminal, and/or a digital decoder according to Claim 12; and
- at least one server (5) that is accessible via the second telecommunication network, said server having access to information data relating to at least one broadcasting channel broadcasting at least one audio and/or video programme capable of being rendered on the rendering device.

14. Communication system according to Claim 13, wherein said information data to which the server has access are updated in real time.

15. Communication system according to Claim 13 or 14, wherein the terminal is furthermore equipped with a module (4F) for rendering at least some of the information data transmitted by the gateway and/or with a storage module for storing at least some of the information data transmitted by the gateway.
